# EUROPÄISCHE PATENTANMELDUNG

(11) **EP 3 741 998 A1**
(43) Veröffentlichungstag der Anmeldung: **25.11.2020**
(21) Anmeldenummer: 20176249.9
(22) Anmeldetag: 25.05.2020
(51) Int. Cl.: F04D 17/16, F04D 25/06, G01F 1/10, F04D 29/42, F23D 14/62, F23D 14/60

(54) **GASGEBLÄSEVORRICHTUNG MIT EINEM GASGEBLÄSE UND EINEM ANEMOMETER**

(30) Priorität: 24.05.2019 DE 102019113985
(71) Anmelder: EBM-PAPST Landshut GmbH, 84030 Landshut (DE)
(72) Erfinder: Klink, Hans-Joachim, 84184 Tiefenbach (DE); Weingart, Markus, 84056 Rottenburg (DE); Dr. Kreuzer, Daniel, 84032 Altdorf (DE); Schmidt, Tobias, 84030 Ergolding (DE)
(74) Vertreter: Staeger & Sperling Partnerschaftsgesellschaft mbB

(57) **Zusammenfassung**

Die Erfindung betrifft eine Gasgebläsevorrichtung umfassend ein Gasgebläse mit einem Elektromotor, einer Motorelektronik und einem über den Elektromotor angetriebenen Gebläserad zur Erzeugung eines Volumenstroms gebildet aus Luft und dem Gasgebläse zuführbaren Brenngas von einem Ansaug zu einem Ausblas des Gasgebläses, wobei am Ausblas des Gasgebläses ein Anemometer zur Messung des ausgeblasenen Volumenstromes befestigt ist, wobei das Anemometer eine Signalverbindung mit der Motorelektronik des Gasgebläses zur Datenübertragung des gemessenen Volumenstromes aufweist.

## Beschreibung

Die Erfindung betrifft eine Gasgebläsevorrichtung mit einem Gasgebläse und einem Anemometer.

Die Verwendung von Anemometern zur Volumenstrommessung von Gebläsen ist in der Technik bekannt. Das Anemometer ist dabei am Ausblas, d.h. am Austritt des Gebläses vorgesehen und misst den von dem Gebläse ausgeblasenen Volumenstrom. Optional kann das Anemometer auch am Einlass vorgesehen werden.

Bei Gasgebläsen, welche ausgebildet sind, Luft und Brenngas zu fördern und einem Brenner eines Heizgerätes zuzuführen, ist die Verwendung von Anemometern bisher nicht vorgesehen.

Der Erfindung liegt deshalb die Aufgabe zugrunde, eine Gasgebläsevorrichtung mit einem Gasgebläse bereit zu stellen, dessen ausgeblasener Volumenstrom aus Luft und Brenngas messbar und der gemessene Volumenstrom von dem Gasgebläse für die weitere Regelung des Gasgebläses verarbeitbar ist.

Diese Aufgabe wird durch die Merkmalskombination gemäß Patentanspruch 1 gelöst.

Erfindungsgemäß wird eine Gasgebläsevorrichtung umfassend ein Gasgebläse mit einem Elektromotor, einer Motorelektronik und einem über den Elektromotor angetriebenen Gebläserad vorgeschlagen. Das Gebläserad dient zur Erzeugung eines Volumenstroms gebildet aus Luft und dem Gasgebläse zuführbaren Brenngas und fördert den Volumenstrom von einem Ansaug zu einem Ausblas des Gasgebläses. Die Zuführung des Brenngases kann dabei in Strömungsrichtung gesehen vor dem Ansaug des Gasgebläses oder per Gasanschluss an dem Gasgebläse erfolgen. Das Gasgebläse ist vorzugsweise als sogenanntes vormischendes Gasgebläse ausgebildet, wobei Luft und Brenngas gegenüber der Umwelt abgedichtet zusammen gefördert werden. Am Ausblas des Gasgebläses ist ein Anemometer zur Messung des ausgeblasenen Volumenstromes befestigt, das eine Signalverbindung mit der Motorelektronik des Gasgebläses zur Datenübertragung des gemessenen Volumenstromes aufweist.

Als Gasgebläse können beliebige Gebläsearten wie beispielsweise Radialgebläse oder Axialgebläse verwendet werden.

Der über das Anemometer gemessene, von dem Gasgebläse ausgestoßene Volumenstrom aus Luft und Brenngas wird als Signal an die Motorelektronik übermittelt und fließt unter anderem als Parameter in die Regelung des Brennstoff-Luftgemisches ein, so dass die Drehzahl des Gebläserads und die Brennstoffzufuhr in Abhängigkeit des Volumenstroms gesteuert werden kann.

In einer bevorzugten Ausführungsvariante der Gasgebläsevorrichtung ist das Anemometer als Flügelradanemometer mit einem Flügelrad ausgebildet. Das Flügelrad steht mit seinen Schaufeln im Strömungskanal des Ausblases des Gasgebläses. Seine Rotationsgeschwindigkeit ist unmittelbar abhängig von dem ausgeblasenen Volumenstrom.

In einer Variante erfolgt die Signalübertragung per Kabel. Vorzugsweise sieht die Gasgebläsevorrichtung jedoch vor, dass die Signalverbindung des Anemometers mit der Motorelektronik drahtlos ist.

In einer Ausführung ist die Gasgebläsevorrichtung dadurch gekennzeichnet, dass die Motorelektronik einen Magnetfeldsensor und das Flügelradanemometer mindestens einen an einem Flügelrad rotierenden Magneten aufweist, wobei der von dem Flügelradanemometer gemessene Volumenstrom durch die Rotation des mindestens einen Magneten bestimmt und an den Magnetfeldsensor übertragen wird. Die Motorelektronik wird hierfür um den kostengünstig erhältlichen Magnetfeldsensor ergänzt. Dieser wird in einer Weiterbildung zur Erhöhung der Fehlersicherheit redundant vorgesehen. Das durch die Magneten erzeugte Magnetfeld am Anemometer wird von dem oder den Magnetfeldsensoren erfasst. Die Motorelektronik ist bei Gasgebläsen nur wenige Zentimeter und mithin nahe genug am Anemometer verbaut, als dass die Signalübertragung fehlerfrei gewährleistet ist. Als Magnetfeldsensor kann beispielsweise ein Magnetfeld B-Sensor verwendet werden. Die Magnete sind vorzugsweise als Neodym-Magnete ausgebildet.

Alternativ weist das Anemometer in einer Ausführungsvariante ein induktionsgespeistes Funkmodul auf, welches den gemessenen Volumenstrom als Signal drahtlos per Funk an die Motorelektronik überträgt.

In einer Weiterbildung der Gasgebläsevorrichtung sind an dem Flügelrad des Flügelradanemometers mehrere Magnete asymmetrisch angeordnet. Dadurch wird eine fehlersichere Auswertung des gemessenen Volumenstromes ermöglicht. Insbesondere können somit über feststellbare unterschiedliche Puls-Pausen-Verhältnisse fehlende Magnetfeldimpulse erkannt werden.

Zur Vermeidung einer unrunden Rotation werden in einer Ausführung am Flügelrad des Flügelradanemometers Wuchtgewichte zum Wuchtausgleich der insbesondere asymmetrisch positionierten Magnete angeordnet.

Zudem sieht eine Weiterbildung der Gasgebläsevorrichtung vor, dass das Gasgebläse am Ausblas einen Flansch aufweist, in den das Anemometer in einer Ausführungsvariante integriert ist. Der Flansch des Gasgebläses wird üblicherweise zur Anbindung an den Brenner des Heizgerätes verwendet. Durch Bildung des Flansches durch das Anemometer ist kein zusätzliches Bauteil benötigt.

Als alternative Ausführungsvariante weist das Anemometer ein zum Flansch des Gasgebläses bezüglich seiner geometrischen Form korrespondierendes Flanschelement auf, das als Dichtung ausgebildet ist, so dass das Anemometer dicht am Ausblas des Gasgebläses befestigbar ist. Die Dichtung kann beispielsweise durch eine Ummantelung des Flansches und Anemometers mit Dichtmaterial oder durch Herstellung des Anemometers mit Dichtung im 2K-Prozess realisiert werden. Zudem ist das Gasgebläse über das als Dichtung ausgebildete Anemometer dicht am Brenner des Heizgerätes befestigbar. Die abgedichtete Anbindung ist für Gasgebläse zwingend erforderlich, um einen Austritt des entzündlichen Brenngas-Luftgemisches sicher auszuschließen.

Zur gelagerten Aufnahme des Flügelrads des Flügelradanemometers sind in einer Ausführungsvariante am Ausblas des Gasgebläses oder am Flügelradanemometer Streben angeordnet oder ausgebildet, an denen eine Lagerung für das Flügelrad des Flügelradanemometer angeordnet ist. Die Streben überstrecken den Ausblasquerschnitt von radial außen zur Rotationsachse des Flügelrades, so dass zentral an der Rotationsachse die Lagerung positionierbar ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigt:

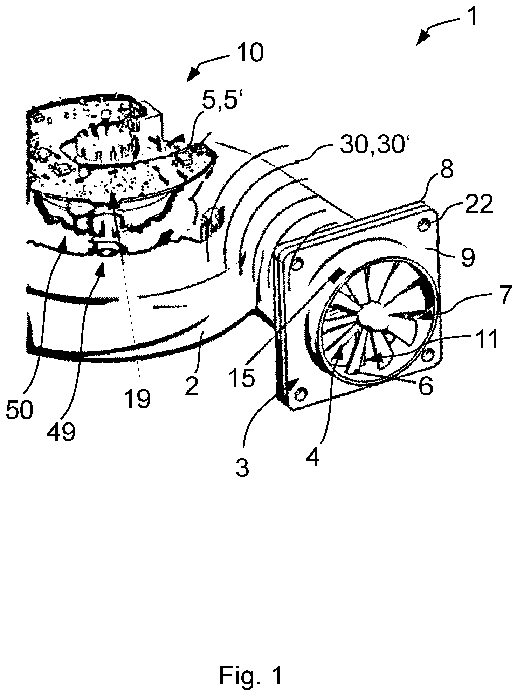

- Fig. 1: eine Gasgebläsevorrichtung in einer schematischen perspektivischen Ansicht.

In Figur 1 ist ein Ausführungsbeispiel einer Gasgebläsevorrichtung 1 als schematische perspektivische und teilweise aufgeschnittene Ansicht dargestellt, wobei unterschiedliche Lösungen innerhalb der einen Figur zusammengefasst sind.

Die Gasgebläsevorrichtung 1 umfasst das Gasgebläse 10 und das daran am Ausblas 7 als Flügelradanemometer 3 lösbar befestige Anemometer. Das Gasgebläse 10 ist als Radialgebläse mit dem Gebläsegehäuse 2 und dem darin oder daran über die Schwingungsentkopplung 49 gelagert angeordneten Elektromotor 50 ausgebildet, der ein nicht gezeigtes Gebläserad zur Erzeugung des über den Ausblas 7 ausgeblasenen Volumenstroms aus Luft und Brenngas antreibt. Auf dem Elektromotor 50 ist unmittelbar die Motorelektronik 19 auf einer Leiterplatte montiert, über welche die Drehzahl des Gebläserads gesteuert bzw. geregelt wird. Alternativ kann die Motorelektronik 19 auch am Gebläsegehäuse 2 montiert sein. Das Gebläsegehäuse 2 weist am Ausblas 7 den Flansch 8 auf, an dem das Flügelradanemometer 3 zur Messung des ausgeblasenen Volumenstromes mit einem kontaktierbar geformten Flanschelement 9 befestigt ist.

Das Flügelradanemometer 3 weist das Flügelrad 4 mit einer Vielzahl von in einem Schaufelkranz angeordneten Schaufeln auf, die an der achszentralen Nabe zusammengeführt sind. Zudem weist das Flügelradanemometer 3 mehrere den Ausblas 7 überstreckende Streben 11 auf, die ebenfalls achszentral zusammenlaufen und im Bereich der Rotationsachse des Flügelrades 4 eine Lagerung für das Flügelrad 4 bestimmen.

Das Ausführungsbeispiel zeigt zwei alternative drahtlose Signalverbindungen des Flügelradanemometers 3 mit der Motorelektronik 19. Als erste Variante wird die Drehzahl des Flügelrads 4 durch einen oder mehrere an den Schaufelspitzen angeordnete Magnete 6, vorzugsweise Neodym-Magnete, per induktionsgespeistem Funkmodul 15 gemessen und per Funkwellen 30 an die Motorelektronik 19 übermittelt, die einen Funkempfänger 5 aufweist. Das Funkmodul 15 ist radial außenseitig zu dem Flügelrad 4 positioniert und erfasst die Drehzahl des Flügelrads 4.

Als zweite Alternative werden mehrere Magnete 6 in Umfangsrichtung asymmetrisch an verschiedenen Schaufeln des Flügelrads 4 positioniert, die während der Rotation ein Magnetfeld 30' erzeugen, das über den B-Feld Magnetfeldsensor 5' erfasst wird. Aus der Pulsfrequenz des Magnetfelds wird der ausgestoßene Volumenstrom berechnet.

Nicht gezeigt, gleichwohl an einer oder mehreren der Schaufeln vorsehbar sind Wuchtgewichte zum Auswuchten des Flügelrads 4 im Ausgleich zu den Massen des einen Magnets 6 oder alternativ der Vielzahl von vorgesehenen Magnete 6.

In einer zur gezeigten alternativen Ausführung wird das Flügelradanemometer 3 in den Flansch 8 integriert.

Zudem können in der gezeigten Ausführung der Flansch 8 und das Flanschelement 9 mit einer Dichtmasse ummantelt werden. Ferner kann das Flügelradanemometer 3 selbst als Dichtung zum abgedichteten Anschluss an den Brenner eines Heizgeräts ausgebildet werden. Der Anschluss erfolgt über die vier Bohrungen 22.

## Patentansprüche

1. Gasgebläsevorrichtung (1) umfassend ein Gasgebläse (10) mit einem Elektromotor (50), einer Motorelektronik (19) und einem über den Elektromotor (50) angetriebenen Gebläserad zur Erzeugung eines Volumenstroms gebildet aus Luft und dem Gasgebläse zuführbaren Brenngas von einem Ansaug zu einem Ausblas (7) des Gasgebläses (10), wobei am Ausblas (7) des Gasgebläses (10) ein Anemometer zur Messung des ausgeblasenen Volumenstromes befestigt ist, wobei das Anemometer eine Signalverbindung mit der Motorelektronik (19) des Gasgebläses (10) zur Datenübertragung des gemessenen Volumenstromes aufweist.

2. Gasgebläsevorrichtung nach Anspruch 1, **dadurch gekennzeichnet**, das Anemometer als Flügelradanemometer (3) mit einem Flügelrad (4) ausgebildet ist.

3. Gasgebläsevorrichtung nach Anspruch 1 oder 2, **dadurch gekennzeichnet, dass** die Signalverbindung des Anemometers mit der Motorelektronik (19) drahtlos ist.

4. Gasgebläsevorrichtung nach Anspruch 2 und 3, **dadurch gekennzeichnet, dass** die Motorelektronik (19) einen Magnetfeldsensor (5') und das Flügelradanemometer (3) mindestens einen an einem Flügelrad (4) rotierenden Magneten (6) aufweist, wobei der von dem Flügelradanemometer gemessene Volumenstrom durch die Rotation des mindestens einen Magneten (6) bestimmt und an den Magnetfeldsensor (5') übertragen wird.

5. Gasgebläsevorrichtung nach dem vorigen Anspruch, **dadurch gekennzeichnet, dass** der Magnetfeldsensor (5') auf der Motorelektronik (19) des Gasgebläses (10) redundant vorgesehen ist.

6. Gasgebläsevorrichtung nach einem der vorigen Ansprüche, **dadurch gekennzeichnet, dass** das Anemometer ein induktionsgespeistes Funkmodul (15) aufweist, welches den gemessenen Volumenstrom als Signal drahtlos an die Motorelektronik (19) überträgt.

7. Gasgebläsevorrichtung nach einem der vorigen Ansprüche, **dadurch gekennzeichnet, dass** das Anemometer eine Magnetfeldübertragung zur Übertragung von Magnetfeldpulsen an die Motorelektronik (19) aufweist.

8. Gasgebläsevorrichtung nach Anspruch 4 oder 5 und 6, **dadurch gekennzeichnet, dass** an dem Flügelrad (4) des Flügelradanemometers (3) mehrere Magnete (6) asymmetrisch angeordnet sind.

9. Gasgebläsevorrichtung nach dem vorigen Anspruch, **dadurch gekennzeichnet, dass** die Magnete (6) als Neodym-Magnete ausgebildet sind.

10. Gasgebläsevorrichtung nach Anspruch 8 oder 9, **dadurch gekennzeichnet, dass** am Flügelrad (4) des Flügelradanemometers (3) Wuchtgewichte zum Wuchtausgleich der Magnete (6) angeordnet sind.

11. Gasgebläsevorrichtung nach einem der vorigen Ansprüche, **dadurch gekennzeichnet, dass** das Gasgebläse (10) am Ausblas (7) einen Flansch (8) aufweist, in den das Anemometer integriert ist.

12. Gasgebläsevorrichtung nach dem vorigen Anspruch, **dadurch gekennzeichnet, dass** das Anemometer ein zum Flansch (8) bezüglich seiner geometrischen Form korrespondierendes Flanschelement (9) aufweist, das als Dichtung ausgebildet ist, so dass das Anemometer dicht am Ausblas des Gasgebläses (10) befestigt ist.

13. Gasgebläsevorrichtung nach einem der vorigen Ansprüche 2 - 12, **dadurch gekennzeichnet, dass** am Ausblas (7) des Gasgebläses (10) oder am Flügelradanemometer (3) Streben (11) angeordnet oder ausgebildet sind, an denen eine Lagerung für das Flügelrad (4) des Flügelradanemometers (3) angeordnet ist.
